Europäisches Patentamt

European Patent Office

Office européen des brevets

(19)

(11) Veröffentlichungsnummer: **0 241 885**

**A2**

(12) **EUROPÄISCHE PATENTANMELDUNG**

(21) Anmeldenummer: **87105394.8**

(22) Anmeldetag: **11.04.87**

(51) Int. Cl.⁴: **C08F 8/12 , C08F 8/44**

(30) Priorität: **18.04.86 DE 3613207**

(43) Veröffentlichungstag der Anmeldung:
**21.10.87 Patentblatt 87/43**

(84) Benannte Vertragsstaaten:
**AT BE CH DE ES FR GB GR IT LI LU NL SE**

(71) Anmelder: **AKZO N.V.**
**Velperweg 76**
**NL-6824 BM Arnhem(NL)**

(72) Erfinder: **Diamantoglou, Michael, Dr.**
**Kolpingstr. 4**
**D-8765 Erlenbach(DE)**
Erfinder: **Josefiak, Christoph, Dr.**
**Dr. Jordanstr. 17b**
**D-8765 Erlenbach(DE)**
Erfinder: **Mägerlein, Helmut, Dr.**
**Blumenstr. 40**
**D-8753 Obernburg(DE)**

(74) Vertreter: **Fett, Günter**
**Akzo GmbH Kasinostrasse 19-23**
**D-5600 Wuppertal 1(DE)**

(54) **Mit Wasser quellbare Zusammensetzung, ihre Herstellung und Verwendung.**

(57) Es wurde eine neue mit Wasser quellbare Zusammensetzung aus einem Geliermittel auf der Basis von hydrolysierten Homo-oder Copolymeren des Acrylnitrils und aus einem inerten Metalloxid hergestellt. Dabei wurden 1 bis 22% der Nitrilgruppen zu Amidgruppen und 99 bis 78% zu Alkalisalzen verseift. Die erhaltene Zusammensetzung hat eine schwammartige Struktur und zeichnet sich durch hohe Werte sowohl bezüglich der Quellkapazität als auch der Quellgeschwindigkeit aus. Daher eignet sie sich insbesondere zur Windelherstellung und zur Flachdachbegründung.

EP 0 241 885 A2

## Mit Wasser quellbare Zusammensetzung, ihre Herstellung und Verwendung

Die Erfindung betrifft eine mit Wasser quellbare Zusammensetzung aus einem Geliermittel auf der Basis von hydrolysierten Homo-oder Copolymeren des Acrylnitrils und aus einem inerten Metalloxid. Sie betrifft außerdem ein Verfahren zu ihrer Herstellung sowie ihre Verwendung.

Die Herstellung einer derartigen Zusammensetzung ist in der DE-OS 35 03 458 beschrieben. Dort läßt man ein Wasser absorbierendes Harz in Gegenwart eines Pulvers aus einem inerten anorganischen Material ein Vernetzungsmittel und Wasser absorbieren und erhitzt dann diese Mischung unter Rühren, um die Vernetzung des Harzes und die Entfernung von Wasser zu bewirken. Das Harz enthält Einheiten eines Monomeren mit einer Carboxylgruppe in Form der freien Säure oder eines Salzes als eine Aufbaukomponente desselben. Das Wasser absorbierende Harz kann vorzugsweise, z.B. ein vernetztes Acrylsäure-Acrylamid-sulfo-niertes Acrylamid-Terpolymeres sowie sein Alkalisalz sein. Das anorganische Material kann vorzugsweise feinteiliges Siliciumdioxid sein. Die so hergestellten Produkte sollen sowohl ein gutes Wasserabsorptionsvermögen als auch eine hohe Wasserabsorptionsrate haben.

Diese Eigenschaftskombination ist insbesondere für den Einsatz im Hygienebereich sowie im Bereich der Agrikultur wichtig.

Aufgabe der vorliegenden Erfindung ist es, Zusammensetzungen bereitzustellen, die in Wasser, wäßrigen Salzlösungen und physiologischen Flüssigkeiten mit sehr hoher Geschwindigkeit und gleichzeitig in einem sehr hohen Ausmaß quellen. Aufgabe der Erfindung ist es auch, diese Zusammensetzung einfach, zuverlässig und preiswert herzustellen.

Die erfindungsgemäße Lösung dieser Aufgabe ist den Patenansprüchen zu entnehmen. Sie ist hauptsächlich gekennzeichnet durch die Auswahl eines günstigen Verhältnisses von Amidgruppen zu Alkalicarboxylatgruppen. Es wird durch teilweise Verseifung und Neutralisation der Nitril-, Ester-oder Carbonsäure-Gruppen von Homo-oder Copolymeren des Acrylnitrils mit ungesättigten Verbindungen wie Acrylsäure, Acrylsäureester, Methacrylsäure, Methacrylsäureester, Maleinsäure, Maleinsäureanhydrid, Acrylamid oder Vinylsulfonsäure erhalten.

Zur Verseifung wurden Alkalihydroxide, insbesondere Natrium - und Kaliumhydroxid in einer Menge von 0,5 - 1,5, vorzugsweise 1,0 -1,25 Mol pro Mol zu verseifender Komponente eingesetzt.

Die erfindungsgemäßen Zusammensetzungen sind pulverförmig und haben eine poröse Struktur in der Art eines Schwammes. Die Poren liegen hauptsächlich im Bereich von 0,5 - 10 $\mu$m.

Wesentlich ist auch die Anwesenheit eines inerten Metalloxids wie $Al_2O_3$ und insbesondere $SiO_2$. Sie werden vorzugsweise schon zur Polymerisation zugesetzt, können aber auch erst bei der Verseifung hinzugefügt werden. Mit Metalloxid sind auch die entsprechenden Aquoxide gemeint. Die Metalloxide wurden als inert angesehen, wenn sie entweder bei der Polymerisation überhaupt nicht reagieren oder aber die dabei gebildeten Bindungen bei der anschließenden Behandlung mit Alkalilaugen wieder gespalten wurden.

Das Geliermittel wird duch Polymerisation von Acrylnitril und evtl. Comonomeren in Wasser sowie durch anschließende teilweise Verseifung der Polymerisate hergestellt. Als Comonomere kommen andere ungesättigte Verbindungen in Frage, insbesondere Acrylssäure, Acrylsäureester, Methacrylsäure, Methacrylsäureester, Maleinsäure, Maleinsäureanhydrid, Acrylamid, Vinylacetat, Styrol und Vinylsulfonsäure. Aber auch gesättigte, hydroxylgruppenhaltige Polymere, insbesondere Polysaccaridde, Polysaccaridderivate und Polyvinylalkohol können zur Bildung von Pfropfpolymeren eingesetzt werden. In Abhängigkeit von den eingesetzten Monomeren erfolgt die Herstellung ein-oder zweistufig. Das zweistufige Verfahren (Beispiel 1-36) wird dann angewandt, wenn bei der Polymerisation ein Produkt entsteht, das nicht oder nur wenig in dem wäßrigen Reaktionsmedium quillt. Dies ist beispielsweise der Fall, wenn nur Acrylnitril oder Acrylnitril in Kombination mit Vinylacetat, Styrol oder Acrylsäure-bzw. Methacrylsäureestern polymerisiert wird. In diesem Fall wird das Metalloxid (Kieselsäure, Kieselgel, Aerosil®, Aluminiumoxid) vor der Polymerisation zugesetzt. Dabei ist es besonders wichtig, daß das Metalloxid mit den zu polymerisierenden Monomeren entweder überhaupt nicht oder nur zu einer sehr instabilen Verbindung reagiert, die spätestens bei der Verseifung wider gespalten wird. Das auf diese Weise hergestellte Polymer wird abgesaugt und anschließend naß oder nach vorheriger Trocknung in Wasser/Alkohol-Gemisch mit dem gewünschten Alkalihydroxid verseift. Für die Polymerisation und Verseifung sind die üblichen Rührreaktoren gut geeignet.

Vinylacetat, Styrol und das Metalloxid können aufgrund ihres hydrophoben Charakters nur in begrenzten Mengen beigemischt werden. In den Beispielen 2-9 und 11 - 14 wird die Quellungsgrad/Füllstoffmenge-Abhängigkeit demonstriert.

Der Wassergehalt des Verseifungsmediums darf nicht wesentlich über 30 Vol.-% liegen, da sonst bei der Verseifung nicht ein körniges Produkt, sondern eine gummiartige Masse entsteht.

Die Nitrilgruppen dürfen nicht vollständig zu Carboxylatgruppen, sondern in einem bestimmten Ausmaß nur bis zu Carbonamidgruppen verseift werden, da letztere Gruppen das Quellverhalten der Hydrogele in wäßrigen Salzlösungen besonders günstig beeinflussen. Dies geht aus den Beispielen 16 - 20 und 26 eindeutig hervor. Geliermittel, die nach dieser Verfahrensweise ohne Zusatz von Metalloxid hergestellt wurden (Vergleichsbeispiele 30 - 31), quellen in Wasser und wäßrigen Salzlösungen sehr langsam. Die Quellgeschwindigkeit wird jedoch stark verbessert (Beispiele 32 - 36), wenn das Metalloxid dem Verseifungsansatz beigemischt wird.

Die Arbeitsweise bei der Polymerisation ist im wesentlichen:

-Acrylnitrilanteil: 50 - 99 , vorzugsweise 85 - 98 Gew.-%
-Comonomerenanteil: 0 - 30 , vorzugsweise 5 - 15 Gew.-%
-Metalloxid: 1 - 50, vorzugsweise 2 - 10 Gew.-%
-Reaktionsmedium:Wasser
-Reaktionstemperatur: 30 - 80°C, vorzugsweise 40 - 60°C
-Initiator: wie üblich, z.B. Persulfate, Peroxide Ammoniumcernitrat.

Die Arbeitsweise bei der Verseifung ist im wesentlichen:

-Alkalihydroxid: Natriumhydroxid, Kaliumhydroxid
-Alkalimenge: 0,5 - 1,5, vorzugsweise 1 - 1,25 Mol pro Mol zu verseifender Komponente
-Reaktionsmedium: Wasser/Alkohol mit 1 bis 4 C-Atomen
Alkohol: vorzugsweise Methanol oder Ethanol
-Wassergehalt: 5 - 40 Vol.-%, vorzugsweise 10 - 30 Vol.-%
-Reaktionstemperatur: Rückfluß
-N-Gehalt nach Verseifung: 0, 1 - 16%, vorzugsweise 0,5-7% entsprechend einem Carbonamidgruppengehalt von 0,3 - 50%
bzw. 1,5 - 22%

Das einstufige Verfahren (Beispiele 37-59) wird dann angewandt, wenn bei der Polymerisation ein Produkt entsteht, das in dem wäßrigen Reaktionsmedium sehr stark quillt. Dies ist beispielsweise der Fall, wenn Acrylnitril in Kombination mit acrylsäure, Maleinsäure, Vinylsulfonsäure und anderen anionischen ungesättigten Verbindungen oder Acrylamid polymerisiert wird. Bei der Polymerisation entstehen Gele, die ohne vorherige Isolierung durch Zusatz des gewünschten Alkalihydroxids und Alkohols verseift bzw. neutralisiert werden (Beispiele 37 - 47).

Den ungesättigten Verbindungen können auch bei der Polymerisation verschiedene Polysaccharide wie Cellulose, Carboxymethylcellulose (CMC), Hydroxyethylcellulose (HEC), Hydroxypropylcellulose (HPC), Methylcellulose (MC), Ethylcellulose (EC), Stärke, Stärkeether z.B. Carboxymethylstärke (CMS), Natriumalginat, Guar oder aber auch andere hydroxygruppenhaltige Polymere wie Polyvinylalkohol beigemischt werden, wobei diese mit den ungesättigten Verbindungen zu Pfropfpolymeren reagieren (Beispiele 48 - 59). Für das einstufige Verfahren sind Mischer, beispielsweise Draismischer, besonders geeignet, da nach der Polymerisation ein gelartiges Produkt vorliegt.

Der Acrylnitrilanteil darf bei diesen Hydrogelen nicht unter 10% liegen, da sonst nur lösliche Produkte entstehen.

Die nach den oben beschriebenen Arbeitsweisen synthetisierten Polymeren quellen in Wasser und wäßrigen Salzlösungen nur sehr langsam, wenn nicht bei der Verseifung ein Metalloxid zugesetzt wird.

Die Arbeitsweise bei der Polymerisation ist im wesentlichen:

-Acrylnitrilanteil: 10 - 95 , vorzugsweise 15 - 80 Gew.-%
-ungesättigter, saurer Komponentenanteil: 5 - 90 , vorzugsweise 10 - 85 Gew.-%
-ungesättigter, neutraler Komponentenanteil: 1 - 50 , vorzugsweise 2 - 25 Gew.-%
-gesättigter, hydroxylgruppenhaltiger Komponentenanteil: 1 - 50 , vorzugsweise 2 - 25% Gew.-%
-Reaktionsmedium: Wasser
-Reaktionstemperatur: 30 - 80°C, vorzugsweise 40 - 60°C
-Initiator: wie üblich
-Reaktionsgerät: Kneter

Die Arbeitsweise bei der Verseifung bzw. Neutralisation ist im wesentlichen:

-Zumischen des Metalloxids
-Alkali: Natriumhydroxid, Kaliumhydroxid
-Alkalimenge: 0,5 - 1,5, vorzugsweise 1 - 1,25 Mol pro Mol zu verseifender Komponente
-Reaktionsmedium: Wasser/Alkohol mit 1 bis 4 C-Atomen
Alkohol: vorzugsweise Methanol oder Ethanol
-Wassergehalt: 10 - 70 Vol.-%, vorzugsweise 30 - 50%
-Reaktionstemperatur: Rückfluß

Die Quelleigenschaften der synthetisierten Zusammensetzung werden nach dem
-Porous-Plate-Test (Fa. Johnson and Johnson)
-dem Demand-Test (B.M. Lichstein, INDA 2nd Annual Symposium, Nonwoven Produkt Development, March 5 u. 6. 1974, Washington, D.C.) und
-dem sogenannten (Glasfritten-Test) ermittelt. Bei dem letzten Test wird die Testsubstanz in einem Becherglas mit einem Überschuß der gewünschten Flüssigkeit, z.B. mit vollentsalztem Wasser ( = VE-Wasser) oder mit einer physiologischen Flüssigkeit versetzt und 1/2 Stunde quellen gelassen. Danach wird der Inhalt des Becherglases auf eine GI Glasfritte gegeben; sobald keine überschüssige Flüssigkeit mehr abfließt (üblicherweise nach 2 - 4 Stunden), wird durch Wiegen die absorbierte Flüssigkeitsmenge ermittelt.

Die Meßergebnisse zeigen, daß die erfindungsgemäßen Produkte sowohl sehr stark als auch sehr - schnell mit Wasser quellen. Deswegen eignen sie sich besonders gut für Einsatzzwecke, bei denen wenig Geliermittel (evtl. in einer dünnen Schicht) viel und plötzlich Wasser aufnehmen sollen. Das ist im Hygiene bereich insbesondere bei Windeln der Fall. Aber auch für spezielle Bereiche der Agrikultur ist das erfindungsgemäße Produkt von großer Bedeutung, z.B. für die Flachdachbegrünung. Dabei ist auch der Kalium-und Stickstoff-Gehalt von Bedeutung.

Das erfindungsgemäße Verfahren hat gegenüber dem in der DE-OS 35 03 458 beschriebenen Verfahren den Vorteil, daß die dort wesentliche Vernetzungsreaktion des Geliermittels im gequollenen Zustand und in Gegenwart des Metalloxids entfällt.

## Beispiel 1

### a) Polymerisation

In einem 2 1 Dreihalskolben, versehen mit Rührer, Rückflußkühler, 2 Tropftrichtern und Thermometer, wurden unter starkem Rühren 5 g Kieselgel (engporig) in 1 1 Wasser suspendiert. Die Apparatur wurde dann 1/2 h mit Stickstoff gespült. Anschließend wurden aus den Tropftrichtern nacheinander 100 g frisch destilliertes Acrylnitril und 70 ml Ammoniumcernitrat-Lösung (13,7 g Ammoniumcernitrat und 25 g 65 %ige Salpetersäure in 250 ml Wasser) dem Reaktionsgemisch rasch zugesetzt. Die Reaktionsmischung erwärmte sich innerhalb von 1/2 h auf 40 - 45 °C, wobei die anfängliche gelbe Färbung rasch verschwandt. Das Gemisch wurde bei dieser Temperatur noch 3 h weitergerührt, bis ein nicht mehr rührbarer Brei entstanden war. Nach dem Abkühlen, üblicherweise über Nacht, wurde das Reaktionsprodukt abgesaugt, mit Wasser gewaschen und bei 70 °C im Vakuumtrockenschrank getrocknet.
Ausbeute: 100 g (95,2 % d. Th.)

### b) Verseifung

In einem 2 1 Dreihalskolben mit Rührer und Rückflußkühler wurden zu einem Gemisch aus 150 ml Wasser und 640 ml Ethanol (19 : 81) 30 g Polymer und 30 g Kaliumhydroxid gegeben. Die Mischung wurde dann unter Rückfluß gekocht. Dabei tratt rasch eine dunkelbraune Verfärbung ein, die mit fortschreitender Reaktion wieder verschwandt. Nach 24 h wurde die Reaktionsmischung mit Essigsäure neutralisiert, das - schwach gelbe Produkt abgesaugt, zunächst zweimal mit Ethanol/Wasser (90 : 10), dann dreimal mit reinem Ethanol gewaschen und im Vakuumtrockenschrank bei 70°C getrocknet.
Ausbeute : 58 g (95,5 %)
$SiO_2$-Gehalt : 2,4 %
N-Gehalt : 0,5 %
Carbonamidgruppengehalt : 1,57 %
Die nach der oben beschriebenen Verfahrensweise hergestellte Zusammens. quoll in Wasser und wäßrigen Salzlösungen besonders rasch und wies folgende Quellwerte auf:
-Porous-Plate-Test:
Absorption nach 30 Min: 42 ml einer 1%-igen NaCl-Lösung/g Zusammens.
-Demand-Test
Absorption nach 30 Min: 45 ml synth. Urin/g Zusammensetzung
-Glasfritten-Test: 47 ml synth. Urin/g Zusammensetzung
580 ml VE-Wasser/g Zusammensetzung

Beispiele 2 - 9

Auf der Grundlage der Arbeitsweise vom Beitspiel 1 und den Reaktionsbedingungen der Tabelle 1 wurden, ausgehend von Acrylnitril und verschiedenen Kieselsäuremengen sowie -Typen, durch Verseifung des Polymerisats mit Kaliumhydroxid die in der Tabelle 1 aufgeführten Zusammensetzungen synthetisiert.

Beispiel 10

a) Polymerisation

In einem 4 l Dreihalskolben, versehen mit Rührer, Rückflußkühler, 2 Tropftrichtern und Thermometer, wurden unter starkem Rühren 5 g Kieselsäure in 2 l Wasser suspendiert. Nachdem die Apparatur 1/2 h mit Stickstoff gespült worden war, wurden aus den Tropftrichtern nacheinander 200 g frisch destilliertes Acrylnitril und 6 g Ammoniumperoxid isulfat, gelöst in 50 ml Wasser, dem Reaktionsgemisch rasch zugesetzt, die Reaktionslösung innerhalb von 1/2 h auf 45 - 50 °C erwärmt und 6 Stunden bei dieser Temperatur weiter gerührt. Nach dem Abkühlen wurde das Reaktionsprodukt abgesaugt, einmal mit Wasser gewaschen und bei 70 °C im Vakuumtrockenschrank getrocknet.
Ausbeute: 198 g (96,6 % d. Th.)

b) Verseifung

In einem 4 l Dreihalskolben mit Rührer und Rückflußkühler wurden 500 ml Wasser und 1500 ml Methanol vorgelegt und 150 g Polymer sowie 150 g Natriumhydroxid hinzugefügt. Das Reaktionsgemisch wurde 20 h am Rückfluß erhitzt, abgesaugt, mit Methanol neutralgewaschen und im Vakuumtrockenschrank bei 70 °C getrocknet.
Ausbeute : 240 g (91,3 % d. Th.)
$SiO_2$-Gehalt : 1,5 %
N-Gehalt : 2,5 %
Carbonamidgruppengehalt : 7,86 %
Die auf diese Weise synthetisierte Zusammensetzung quoll in Wasser und wäßrigen Salzlösungen spontan und wies folgende Quellwerte auf:
-Porous-Plate-Test: Absorption nach 30 Min. 48 ml 1 %ige NaCl-Lsg./g Zusammensetzung

Beispiel 11 - 14

Auf der Grundlage der Arbeitsweise vom Beispiel 10 und den Reaktionsbedingungen der Tabelle 2 wurden auf Basis Acrylnitril und Kieselsäure die in der Tabelle 2 aufgeführten Zusammensetzungen synthetisiert.

Beispiel 15

a) Polymerisation

In einem 2 l Dreihalskolben, versehen mit Rührer, Rückflußkühler, 2 Tropftrichtern und Thermometer, wurden unter Rühren 2,5 g Aluminiumoxid suspendiert. Nach dem Spülen der Apparatur mit Stickstoff wurden aus den Tropftrichtern nacheinander 100 g frisch destilliertes Acrylnitril und 3 g Ammomiumperoxidisulfat, gelöst in 25 ml Wasser, dem Reaktionsgemisch rasch zugesetzt, die Reaktionslösung innerhalb von 1/2 h auf 45 - 50 °C erwärmt und 6 h bei dieser Temperatur gehalten. Das Reaktionsprodukt wurde am nächsten Tag abgesaugt, mit Wasser gewaschen und bei 70 °C im Vakuumtrockenschrank getrocknet.
Ausbeute: 96 g (93,7 %).

b) <u>Verseifung</u>

In einem 2 1 Dreihalskolben mit Rührer und Rückflußkühler wurden 250 ml Wasser und 750 ml Methanol vorgelegt und 90 g Polymer sowie 90 g Natriumhydroxid hinzugefügt. Das Reaktionsgemisch wurde 20 h am Rückfluß erhitzt, abgesaugt, mit Methanol neutral gewaschen und im Vakuumtrockenschrank bei 70 °C getrocknet.

Ausbeute : 150 g (95,1 % d. Th.)

$Al_2O_3$ : 1,45 %

N : 5,2 %

Carbonamid-Gehalt : 16,34 %

-Porous-Plate-Test: Absorption nach 30 Min: 43 ml 1 %ige NaCl-Lsg./g Zusammensetzung


<u>Beispiel 16 - 20</u>

Auf der Grundlage der Arbeitsweise von Beispiel 1 wurden aus 200 g Acrylnitril und 10 g Kieselgel (engporig) 206 g (98,1 % d. Th.) vernetztes Polymer hergestellt. Ausgehend von diesem Polymer wurden dann nach den in der Tabelle 3 aufgeführten Reaktionsbedingungen Zusammensetzungen mit unterschiedlichem Carbonamidgehalt synthetisiert und ihre Quellkapazität bestimmt.

<u>Tabelle 3</u>: Quellkapazität in Abhängigkeit von Carbonamidgruppengehalt der Zusammensetzung

Ansatz: 40 g Polymer

40 g Kaliumhydroxid

800 ml Wasser/Ethanol (19 :81)

Reaktionstemperatur: Rückfluß

Die Ergebnisse zeigten eindeutig, daß das Produkt, das weitgehend verseift wurde, die max. Wasserabsorption aufweist. Die Urinaufnahme nahm ebenfalls zunächst zu und ging bei einer vollständigen Verseifung wieder zurück.


<u>Beispiel 21</u>

a) <u>Polymerisation</u>

In einem 20 1 Rundkolben, versehen mit Rührer, Rückflußkühler, 2 Tropftrichtern und Thermometer, wurden unter starkem Rühren 32,5 g Kieselsäure gefällt, in 13 1 Wasser suspendiert. Die Apparatur wurde 1 h mit Stickstoff gespült. Danach wurden aus den Tropftrichtern nacheinander 1300 g Acrylnitril und 910 ml Ammoniumcernitrat-Lösung (siehe Beispiel 1) rasch hinzugefügt, die Reaktionsmischung wurde auf 50 °C erhitzt und bei dieser Temperatur 6 h gerührt. Nach dem Abkühlen wurde das Reaktionsprodukt abgesaugt, mit Wasser gewaschen und bei 70 °C im Vakuumtrockenschrank getrocknet.

Ausbeute: 1315 g (98,7 % d. Th., IR-Spektrum Nr. 1).


b) <u>Verseifung</u>

In einem 20 1 Rundkolben mit Rührer und Rückflußkühler wurden zu einem Gemisch aus 3,25 1 Wasser und 9,75 1 Methanol (25 : 75) 1300 g Polymer und 1300 g Natriumhydroxid hinzugefügt und die Mischung 20 h unter Rückfluß gekocht. Nach dem Abkühlen wurde das Reaktionsprodukt abgesaugt, viermal mit Methanol/Wasser (90 : 10), dann einmal mit reinem Methanol gewaschen und im Vakuumtrockenschrank bei 70°C getrocknet.

Ausbeute : 2160 g (99,1 % d. Th., IR-Spektrum Nr. 2).

N-Gehalt : 4,8 %

Carbonamidgruppengehalt : 15,1 %

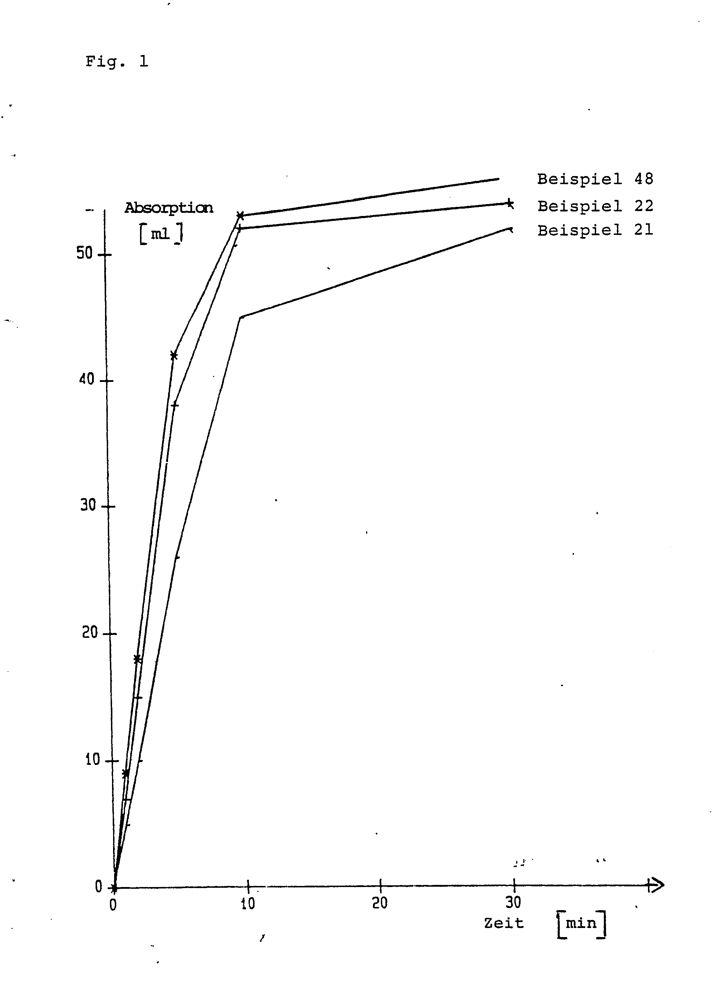

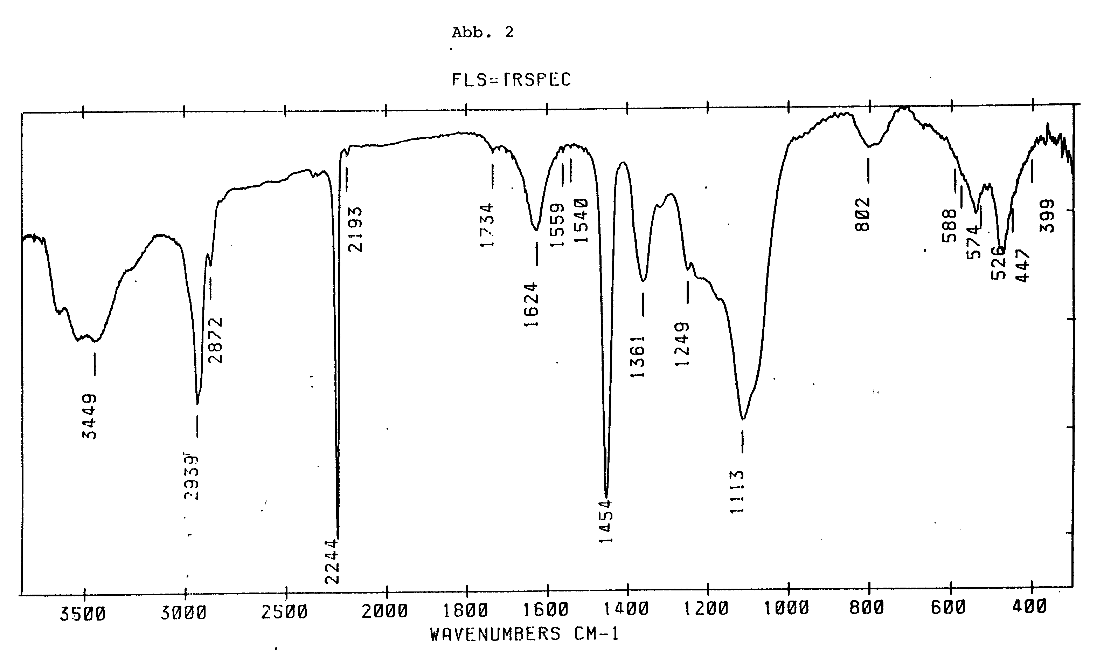

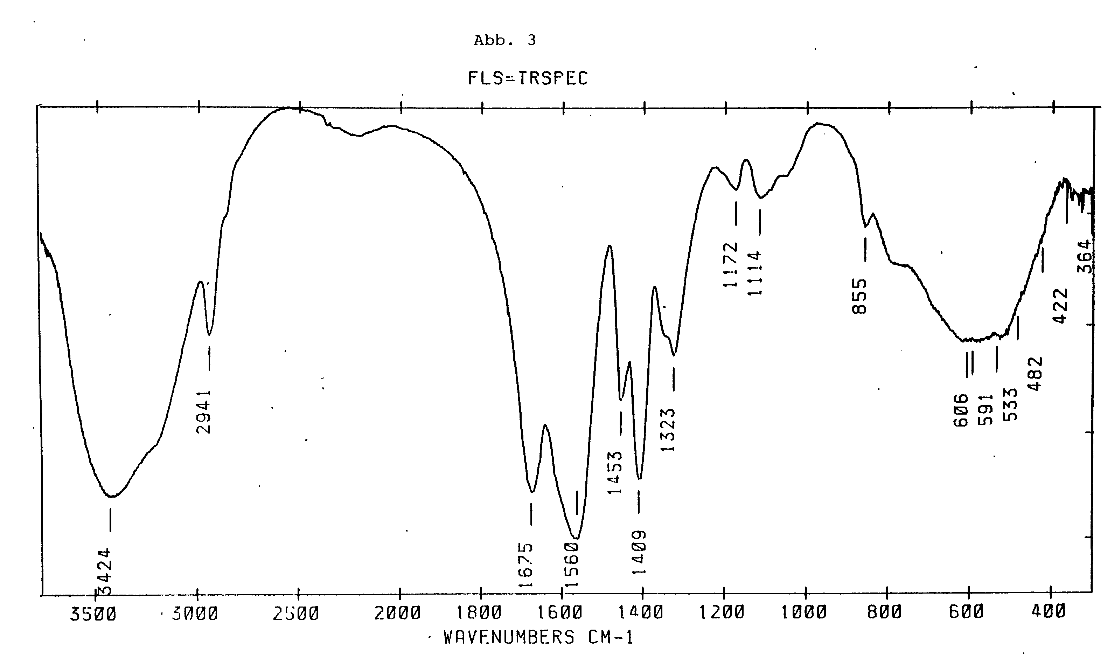

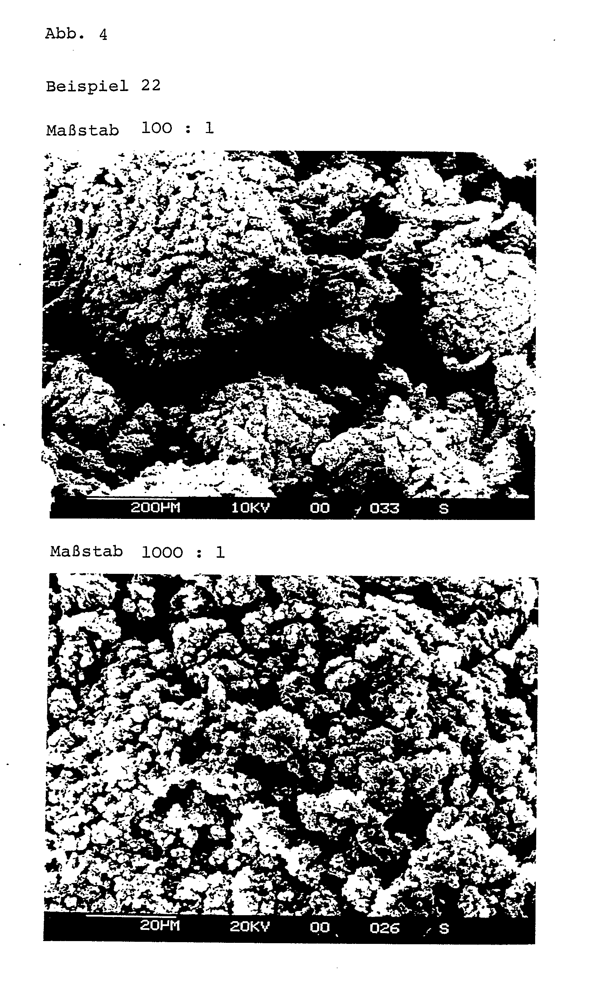

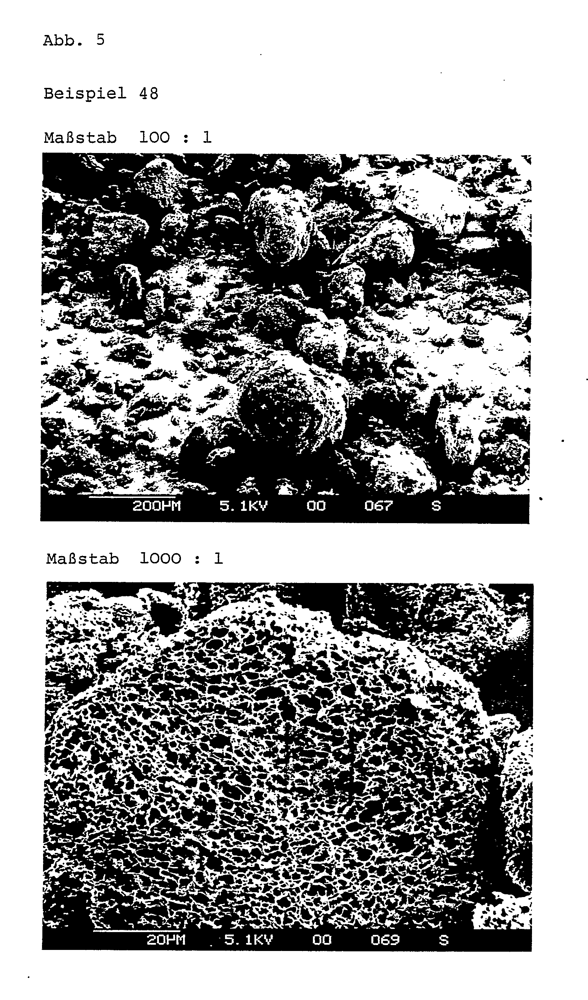

Die auf diese Weise synthetisierte Zusammens. quoll in Wasser und wäßrigen Salzlösungen sehr schnell (Abb. 1).

Quellkapazität

-Porous-Plate-Test:
Absorption nach 30 Min.: 52 ml 1 %ige NaCl-Lösung/g Zusammensetzung
-Demand-Test
Absorption nach 30 Min: 56 ml 1%-ige NaCl-Lösung/g Zusammensetzung
-Glasfritten-Test:
61 ml 1 %ige NaCl-Lösung/g Zusammensetzung
440 ml VE-Wasser/g Zusammensetzung

Beispiel 22

a) Polymerisation

In einem 20 l Rundkolben, versehen mit Rührer, Rückflußkühler, 2 Tropftrichtern und Thermometer, wurden unter starkem Rühren 32,5 g Kieselsäure, gefällt, in 13 l Wasser, die 100 ml konz. Salpetersäure enthalten, suspendiert. Die Apparatur wurde 1 h mit Stickstoff gespült. Danach wurden aus den Tropftrichtern nacheinander 1300 g Acrylnitril und 39 g Ammoniumperoxid sulfat, gelöst in 125 ml Wasser, rasch hinzugefügt. Die Reaktionsmischung wurde auf 50 °C erhitzt und bei dieser Temperatur 6 h gerührt. Nach dem Abkühlen wurde das Reaktionsprodukt abgesaugt, mit Wasser gewaschen und bei 70 °C im Vakuumtrockenschrank getrocknet.
Ausbeute: 1310 g (98,3 % d. Th.)

b) Verseifung

In einem 20 l Rundkolben mit Rührer und Rückflußkühler wurden zu einem Gemisch aus 3,64 l Wasser und 9,36 l Methanol (28 : 72) 1300 g Polymer und 1300 g Natriumhydroxid hinzugefügt, und die Mischung wurde 20 h unter Rückfluß gekocht. Nach dem Abkühlen wurde das Reaktionsprodukt abgesaugt, viermal mit Methanol/Wasser (90 : 10), dann einmal mit reinem Methanol gewaschen und im Vakuumtrockenschrank bei 70°C getrocknet.
Ausbeute : 2140 g (97,9 % d. Th.)
N-Gehalt : 4,6 %
Carbonamidgruppengehalt : 14,46 %
Struktur: Die Zusammensetzung hat eine schwammartige Struktur.
-Die Oberfläche ist zerklüftet wie eine Walnuß (s. Foto).

Quellkapazität

-Porous-Plate-Test
Absorption nach 30 Min.: 54 ml 1 %ige NaCl-Lösung/g Zusammensetzung
-Demand-Test
Absorption nach 30 Min: 56 ml 1%-ige NaCl-Lösung/g Zusammens.
-Glasfritten-Test: 61 ml 1 %ige NaCl-Lösung/g Zusammensetzung 485 ml VE-Wasser/g Zusammensetzung
Die auf diese Weise synthetisierte Zusammens. quoll in Wasser und wäßrigen Salzlösungen sehr schnell (Abb. 1).

Beispiele 23 - 25

Auf der Grundlage der Arbeitsweise von Beispiel 22 und den Reaktionsbedingungen der Tabelle 4 wurden auf Basis Acrylnitril und Kieselsäure mit verschiedenen Initiatoren die in der Tabelle 4 aufgeführten Zusammens. synthetisiert.

Beispiel 26 (Vergleich)

a) Polymerisation

100 g Acrylnitril und 2,5 g Kieselsäure wurden nach der Arbeitsweise von Beispiel 10 polymerisiert. Dabei wurden 100 g (97,6 % d. Th.) Polymer erhalten, das nach folgender Verfahrensweise zu Polyacrylamid verseift wurde.

b) Verseifung

10 g Polymer wurden in 400 ml 85 %iger Schwefelsäure suspendiert und 5 h bei 15 - 20 °C gerührt. Das Reaktionsprodukt wurde abgesaugt, mit Methanol neutral gewaschen und bei 70 °C im Vakuumtrockenschrank getrocknet.
Ausbeute: 12,0 g (91,9 % d. Th.)

Porous-Plate-Test:

Absorption nach 30 Min.: 25 ml 1 %ige NaCl-Lösung/g Zusammensetzung

Beispiel 27 - 29

Auf der Grundlage der Arbeitsweise von Beispiel 10 und den Reaktionsbedingungen der Tabelle 5 wurden aus Acrylnitril, Kieselsäure und Acrylsäureethylester bzw. Vinylacetat oder Styrol die in der Tabelle 5 aufgeführten Zusammensetzungen mit Geliermitteln aus Copolymeren synthetisiert.

Beispiel 30 (Vergleichsbeispiel)

a) Polymerisation

In einem 4 l Dreihalskolben, versehen mit Rührer, Rückflußkühler, 2 Tropftrichtern und Thermometer, wurden 3 l Wasser vorgelegt. Die Apparatur wurde 1/2 h mit Stickstoff gespült, danach wurden aus den Tropftrichtern nacheinander 300 g frisch destilliertes Acrylnitril und 180 ml Ammoniumcernitrat (s. Beispiel 1) hinzugefügt, die Reaktionsmischung auf 50°C erhitzt und 6 Stunden bei dieser Temperatur gehalten. Nach dem Abkühlen wurde das Reaktionsprodukt abgesaugt, mit Wasser gewaschen und bei 70°C im Vakuumtrockenschrank getrocknet.
Ausbeute: 295,5 g (98,5 % d. Th.)

b) Verseifung mit Natriumhydroxid

In einem 2 l Dreihalskolben mit Rührer und Rückflußkühler wurden 150 ml Wasser und 850 ml Ethanol vorgelegt und 100 g Polymer sowie 100 g Natriumhydroxid zugesetzt. Das Reaktionsgemisch wurde 20 Stunden am Rückfluß erhitzt, das Produkt abgesaugt, zunächst mit 10 % wäßrigem Methanol, dann mit reinem Methanol neutral gewaschen und bei 70 °C im Vakuumtrockenschrank getrocknet.
Ausbeute : 170 g (98,1 % d. Th.)
N-Gehalt : 2,5 %
Carbonamidgruppengehalt : 7,85 %

Quellkapazität

    -Porous-Plate-Test
Absorption nach 30 Min.: 8 ml 1 %ige NaCl-Lösung/g Geliermittel
    -Demand-Test
Absorption nach 30 Min: 10 ml 1%-ige NaCl-Lösung/g Geliermittel

## c) Verseifung mit Kaliumhydroxid

Die Verseifung mit Kaliumhydroxid erfolgte nach der im Beispiel 30 b beschriebenen Arbeitsweise. Dabei wurden aus 100 g Polymer und 100 g Kaliumhydroxid 191,5 g (95,3 % d. Th.) des Kaliumsalzes mit einem N-Gehalt von 2,4 % (entsprechend 7,54 % Carbonamidgruppengehalt) erhalten.

Quellkapazität

    -Porous-Plate-Test
Absorption nach 30 Min: 10 ml 1%ige NaCl-Lösung/g Geliermittel
    -Demand-Test
Absorption nach 30 Min: 13 ml 1%-ige NaCl-Lösung/g Geliermittel

## Beispiel 31 (Vergleichsbeispiel)

### a) Polymerisation

In einem 4 1 Dreihalskolben, versehen mit Rührer, Rückflußkühler, 2 Tropftrichtern und Thermometer, wurden 2 1 Wasser vorgelegt. Die Apparatur wurde 1/2 h mit Stickstoff gespült. Danach wurden aus den Tropftrichtern nacheinander 200 g frisch destilliertes Acrylnitril und 6 g Ammoniumperoxidisulfat, gelöst in 50 ml Wasser, rasch zugesetzt. Die Reaktionsmischung wurde auf 50°C erhitzt und 6 h bei dieser Temperatur gehalten. Nach dem Abkühlen wurde das Reaktionsprodukt abgesaugt, mit Wasser gewaschen und bei 70 °C im Vakuumtrockenschrank getrocknet.
    Ausbeute: 197,6 g (98,8 % d. Th.)

### b) Verseifung

In einem 2 1 Dreihalskolben mit Rührer und Rückflußkühler wurden 250 ml Wasser und 750 ml Methanol vorgelegt und 100 g Polymer sowie 100 g Natriumhydroxid zugesetzt. Die Reaktionsmischung wurde 20 h am Rückfluß erhitzt, das Produkt abgesaugt, mit 10 %igem wäßrigem Methanol bzw. reinem Methanol neutral gewaschen und bei 70 °C im Vakuumtrockenschrank getrocknet.
    Ausbeute : 163,5 g (96,6% d.Th.)
N-Gehalt : 5,0%
Carbonamidgruppengehalt : 15,71%

Quellkapazität

    -Porous-Plate-Test
Absorption nach 30 Min.:6 ml 1%-ige NaCl-Lösung/g Geliermittel
    -Demand-Test
Absorption nach 30 Min.:8 ml 1%-ige NaCl-Lösung/g Geliermittel

## Beispiele 32 - 36

Der ausgeprägte Wasserblocking-Effekt der Geliermittel ohne jeglichem Zusatz an Metalloxiden läßt sich auch vermeiden, wenn das Metalloxid dem Verseifungsansatz zugefügt wird. Die so hergestellten Zusammensetzungen haben eine deutlich höhere Quellgeschwindigkeit und Quellkapazität als die entsprechenden Geliermittel allein. Nach dieser Verfahrensweise können aus dem Polymeren des Beispiels 31 durch Zusatz von Metalloxiden Zusammensetzungen mit befriedigenden Quelleigenschaften erhalten werden (s. Tabelle 6).

## Beispiel 37

In einem 10 l Drais-Mischer, versehen mit Rückflußkühler und 2 Tropftrichtern wurden 3 l Wasser vorgelegt. Die Apparatur wird 1 h mit Stickstoff gespült. Danach werden aus den Tropftrichtern nacheinander ein Gemisch von 80 g Acrylnitril und 320 g Acrylsäure und 12 g Ammoniumperoxidisulfat, gelöst in 100 ml Wasser, rasch hinzugefügt, die Mischung auf 55°C erhitzt und bei dieser Temperatur 4 h polymerisiert. Anschließend werden 260 g Natriumhydroxid, 4 l Methanol und 27 g Kieselsäure zugesetzt und das Reaktionsgemisch 6 h am Rückfluß gekocht. Nach dem Abkühlen wird das Reaktionsprodukt abgesaugt, mit Methanol neutral gewaschen und im Vakuumtrockenschrank bei 70°C getrocknet.

Ausbeute: 572 g (97,4% d.Th.)

## Quellkapazität

Porous-Plate-Test
Absorption nach 30 Min.: 45 ml 1%-ige NaCl-Lösung/g Zusammensetzung

## Beispiele 38 - 47

Auf der Grundlage der Arbeitsweise vom Beispiel 37 und den Reaktionsbedingungen der Tabelle 7 werden die Zusammensetzungen der Tabelle 7 synthetisiert.

## Beispiel 48

In einem 10 l Draismischer, versehen mit Rückflußkühler und 2 Tropfttrichtern, werden 10 g vernetzte Carboxymethylcellulose mit einem Substitutionsgrad von 0,75 in 4 l Wasser suspendiert. Die Apparatur wird 1 h mit Stickstoff gespült. Danach werden aus den Tropftrichtern nacheinander ein Gemisch von 60 g Acrylnitril und 330 g Acrylsäure und 260 ml Ammonium cernitrat-Lösung (siehe Beispiel 1), rasch hinzugefügt, die Mischung wird auf 55°C erhitzt und bei dieser Temperatur 4 h gerührt. Anschließend werden 310 g Kaliumhydroxid, 5 l Methanol und 20 g Kieselsäure zugesetzt und das Reaktionsgemisch 6 h am Rückfluß gekocht. Nach dem Abkühlen wird das Reaktionsprodukt abgesaugt, mit Methanol neutral gewaschen und im Vakuumtrockenschrank bei 70°C getrocknet.

Die Zusammensetzung hat eine schwammartige Struktur (s.Foto).
Ausbeute : 630 g (95,6% d.Th.)
N-Gehalt : 1,5%
Carbonamidgruppen-Gehalt : 4,71%

## Quellkapazität

Porous-Plate-Test
Absorption nach 30 Min.: 55 ml 1%-ige NaCl-Lösung/g Zusammensetzung
Quellgeschwindigkeit: s. Abb. 1

Beispiele 49 und 50

Auf der Grundlage der Arbeitsweise von Beispiel 48 und den Reaktionsbedingungen der Tabelle 8 werden die Zusammensetzungen der Tabelle 8 synthetisiert.

## Tabelle 1:

a) Polymerisationsbedingungen

Reaktionsmedium: 1000 ml Wasser
Initiator: 70 ml Ammoniumcernitrat-Lösung
Reaktionstemperatur: 40 – 45 °C
Reaktionszeit: 6 h

b) Verseifungsbedingungen

Reaktionsmedium: Wasser/Ethanol
(19 : 81 Vol.-%, 10 Teile pro 1 Teil Polymer)
Reaktionstemperatur: Rückfluß
Reaktionszeit: 24 h
Verseifung mit: Kaliumhydroxid
(1 Mol KOH/1 Mol Acrylnitril)

| Beispiel Nr. | Ausgangsprodukte | | Ausbeute nach Polymerisation | | nach Verseifung | | Quellkapazität Glasfritten-Test | |
|---|---|---|---|---|---|---|---|---|
| | g Acrylnitril | g Kieselsäure | g | % d.Th. | g | % d.Th. | ml s. Urin/ g Zusammens. | ml VE-H$_2$O/ g Zusammens. |
| 2 | 100 | 5 Kieselsäure | 102 | 97,1 | 201 | 97,4 | 55 | 475 |
| 3 | 100 | 10 Kieselsäure | 103 | 93,6 | 195 | 96,1 | 49 | 465 |
| 4 | 100 | 50 Kieselsäure | 140 | 93,3 | 225 | 95,0 | 25 | 120 |
| 5 | 100 | 5 Kieselgel (grobporig) | 103 | 98,1 | 200 | 96,9 | 54 | 500 |
| 6 | 100 | 10 Kieselgel (grobporig) | 105 | 95,1 | 198 | 97,5 | 45 | 440 |
| 7 | 100 | 5 Aerosil [1] | 101 | 96,2 | 200 | 97,9 | 43 | 430 |
| 8 | 100 | 50 Aerosil [1] | 145 | 96,7 | 235 | 95,1 | 30 | 100 |
| 9 | 100 | 100 Aerosil [1] | 190 | 95,0 | 270 | 94,1 | 24 | 45 |

[1] Unter diesem Warenzeichen wird eine durch Hydrolyse von Siliciumtetrachlorid in einer Knallgasflamme hergestellte Kieselsäure von über 99,8% SiO$_2$-Gehalt vertrieben.

0 241 885

## Tabelle 2:

**a) Polymerisationsbedingungen**

Reaktionsmedium: 1000 ml Wasser
Initiator: 3 g Ammoniumperoxidisulfat
Reaktionstemperatur: 45 - 50 °C
Reaktionszeit: 6 h

**b) Verseifungsbedingungen**

Reaktionsmedium: Wasser/Ethanol
(22 : 78 Vol.-%, 10 Teile pro 1 Teil Polymer)
Reaktionstemperatur: Rückfluß
Reaktionszeit: 24 h
Verseifung mit: NaOH oder KOH
(1,2 Mol pro Mol Acrylnitril)

| Beispiel Nr. | Polymerisation | | | | Verseifung | | | Eigenschaft |
|---|---|---|---|---|---|---|---|---|
| | Ausgangsprodukte | | Ausbeute | | Mittel | Ausbeute | | Porous-Plate-Test ml 1%ige NaCl-Lsg/g Zusammens. Absorpt.nach 30 Min. |
| | g Acryl-nitril | g Kiesel-säure | g | % d.Th. | | g | % d.Th. | |
| 11 | 100 | 2,5 | 101 | 98,5 | KOH | 198 | 95,7 | 39 |
| 12 | 100 | 5,0 | 102 | 97,1 | NaOH | 172 | 96,1 | 46 |
| 13 | 100 | 2,5 Kieselgel | 100 | 97,6 | NaOH | 169 | 96,3 | 46 |
| 14 | 100 | 5,0 Kieselgel | 101 | 96,2 | NaOH | 170 | 94,9 | 43 |

<u>Tabelle 3:</u> Quellkapazität in Abhängigkeit von Carbonamidgruppengehalt
der Zusammensetzung

Ansatz:  40 g Polymer
40 g Kaliumhydroxid
800 ml Wasser/Ethanol (19 : 81)
Reaktionstemperatur: Rückfluß

| Beispiel | Verseifungs-zeit h | Carbonamid-gehalt % | Glasfritten-Test mit VE-Wasser/ g Zusammens. | ml synth. Urin/ g Zusammensetzung |
|---|---|---|---|---|
| 16 | 1 | 60 | 85 | 20 |
| 17 | 2 | 28 | 265 | 36 |
| 18 | 4 | 16 | 380 | 55 |
| 19 | 40 | 2 | 545 | 50 |
| 20 | 60 | 1 | 600 | 45 |

## Tabelle 4:

a) Polymerisationsbedingungen
Ausgangsprodukte: 1300 g Acrylnitril
32,5 g Kieselsäure,gefällt

Reaktionsmediun: 13 l Wasser
Reaktionstemperatur: 50 °C
Reaktionszeit: 6 h
Initiatordosierzeit: 4 h

b) Verseifungsbedingungen

Reaktionsmedium: Wasser/Methanol
(28 : 72 Vol.-%, 10 Teile pro 1 Teil Polymer)
Reaktionstemperatur: 20 h
Verseifung mit: NaOH (1,25 Mol pro Mol Acrylnitril)

| Beispiel | Initiator Art | g | gelöst in ml Wasser | Ausbeute g | % | Verseifungsprodukt Ausbeute g | % | N-Geh. % | $-CONH_2-$ Gehalt % | Porous-Plaste-Test ml 1%ige NaCl-Lsg./g Zusammens. Abs.n.30 Min. |
|---|---|---|---|---|---|---|---|---|---|---|
| 23 | Ammonium-peroxidisulfat | 1 | 100 | 1250 | 93,8 | 2000 | 95,5 | 4,9 | 15,4 | 53 |
| 24 | Kaliumperoxi-disulfat + Natriumhydro-gensulfit | 10 + 1,92 | 100 + 100 | 1320 | 99,1 | 2180 | 98,7 | 5,1 | 16,0 | 52 |
| 25 | Kaliumperoxi-disulfat + Natriumform-aldehyd-sulfoxylat | 17,5 + 0,9 | 100 + 100 | 1315 | 98,7 | 2150 | 98,1 | 5,5 | 17,3 | 47 |

0 241 885

## Tabelle 5:

**a) Polymerisationsbedingungen**

Reaktionsmedium: 1000 ml Wasser
Initiator: 3 g $(NH_4)_2S_2O_8$ in 100 ml Wasser
Dosierzeit: 6 h
Reaktionstemperatur: 50 - 55 °C

**b) Verseifungsbedingungen**

Reaktionsmedium: Wasser/Methanol
(25 : 75 Vol.-%, 10 Teile pro 1 Teil Polymer)
Reaktionstemperatur: Rückfluß
Reaktionszeit: 20 h
Verseifung mit: NaOH (1,25 Mol pro Mol Monomer)

0 241 885

| Beispiel | Ausgangsprodukte g Acryl- nitril | g Comonomer | g Kiesel- säure gefällt | Ausbeute g | % d.Th. | Verseifungsprod. Ausbeute g | % d.Th. | Porous-Plate-Test ml 1 % NaCl/g Zusammens. Abs. nach 30 Min. |
|---|---|---|---|---|---|---|---|---|
| 27 | 85 | 15 Acrylsäure- ethylester | 2,5 | 95 | 92,7 | 145 | 93,5 | 45 |
| 28 | 85 | 15 Vinylacetat | 2,5 | 90 | 87,8 | 125 | 90,8 | 39 |
| 29 | 90 | 10 Styrol | 2,5 | 94 | 91,7 | 140 | 91,0 | 35 |

Tabelle 6:

| Beispiel | Füllstoff Art | Menge % | Porous-Plate-Test Absorption nach 30 Min. ml 1 %ige NaCl-Lsg./g Zus. |
|---|---|---|---|
| 32 | Kieselsäure, gefällt | 1 | 24 |
| 33 | Kieselsäure, gefällt | 2,5 | 39 |
| 34 | Kieselsäure, gefällt | 5 | 47 |
| 35 | Kieselsäure, gefällt | 10 | 40 |
| 36 | Produkt vom Beisp. 22 | 30 | 52 |

Tabelle 7:

a) Polymerisationsbedingungen

    Reaktionsmedium: 3 l Wasser
    Initiator: 12 g Ammoniumperoxidisulfat, gelöst in 100 ml Wasser
    Reaktionstemperatur: 55 °C
    Reaktionszeit: 4 h

b) Neutralisation/Verseifung

    Reaktionsmedium: Wasser/Methanol = 44/56
    Alkali: Natriumhydroxid
    Reaktionstemperatur: Rückfluß
    Reaktionszeit: 20 h
    Kieselsäure: 20 g

| Bei-spiel | Monomerzusammensetzung | | | | Teile | Ausbeute | | Porous-Plate-Test Abs.n.30 Min. ml 1%ige NaCl-Lsg./g Zusammens. |
|---|---|---|---|---|---|---|---|---|
| | Monomer 1 | Teile | Monomer 2 | | | g | % d.Th. | |
| 38 | Acrylnitril | 160 | Acrylsäure | | 240 | 570 | 92,7 | 46 |
| 39 | Acrylnitril | 240 | Acrylsäure | | 160 | 610 | 94,5 | 47 |
| 40 | Acrylnitril | 320 | Acrylsäure | | 80 | 665 | 97,1 | 49 |
| 41 | Acrylnitril | 320 | Methacrylsäure | | 80 | 650 | 95,4 | 43 |
| 42 | Acrylnitril | 240 | Methacrylsäure | | 160 | 580 | 90,3 | 40 |
| 43 | Acrylnitril | 360 | Maleinsäureanhydrid | | 40 | 610 | 84,9 | 42 |
| 44 | Acrylnitril | 320 | Maleinsäureanhydrid | | 80 | 590 | 82,6 | 41 |
| 45 | Acrylnitril | 320 | Acrylamid | | 80 | 620 | 93,8 | 40 |
| 46 | Acrylnitril | 360 | Vinylsulfonsäure | | 40 | 630 | 90,0 | 38 |
| 47 | Acrylnitril | 360 | Carboxymethyl-cellulose | | 40 | 660 | 95,6 | 45 |

## Tabelle 8:

a) Polymerisationsbedingungen:

Reaktionsmedium: 4 l Wasser
Initiator: 12 g Ammoniumperoxidisulfat,
          gelöst in 100 ml Wasser
Reaktionstemperátur: 55°C
Reaktionszeit: 4 Stunden

b) Neutralisation/Verseifung:

Reaktionsmedium: Wasser/Methanol
                   = 44/56
Alkali: Natriumhydroxid
Reaktionstemperatur: Rückfluß
Reaktionszeit: 10 Stunden
Kieselsäure: 20 g

| Bei-spiel | Monomerzusammensetzung | | | | HO-Gruppenhalt. Polymer | Teile | Ausbeute | | Porus-Plate-Test Absorption nach 30 Min. |
|---|---|---|---|---|---|---|---|---|---|
| | Monomer 1 | Teile | Monomer 2 | Teile | | | g | % d.Th. | ml 1%-ige NaCl-Lsg./g Zusamens. |
| 48 | Acrylnitril | 60 | Acrylsäure | 340 | CMC | 20 | 520 | 92,1 | 48 |
| 49 | Acrylnitril | 120 | Acrylsäure | 240 | CMC | 40 | 530 | 90,5 | 45 |
| 50 | Acrylnitril | 120 | Acrylsäure | 240 | Cellulose | 40 | 535 | 91,4 | 39 |
| 51 | Acrylnitril | 120 | Acrylsäure | 240 | HEC | 40 | 525 | 89,7 | 42 |
| 52 | Acrylnitril | 120 | Acrylsäure | 240 | HPC | 40 | 520 | 88,8 | 38 |
| 53 | Acrylnitril | 120 | Acrylsäure | 240 | MC | 40 | 540 | 92,3 | 40 |
| 54 | Acrylnitril | 120 | Acrylsäure | 240 | EC | 40 | 530 | 90,5 | 39 |
| 55 | Acrylnitril | 120 | Acrylsäure | 240 | Stärke | 40 | 540 | 92,3 | 41 |
| 56 | Acrylnitril | 120 | Acrylsäure | 240 | CMS | 40 | 535 | 91,4 | 44 |
| 57 | Acrylnitril | 120 | Acrylsäure | 240 | Alginat | 40 | 530 | 90,5 | 45 |
| 58 | Acrylnitril | 120 | Acrylsäure | 240 | Guar | 40 | 505 | 86,1 | 42 |
| 59 | Acrylnitril | 120 | Acrylsäure | 240 | PVA | 40 | 510 | 87,0 | 40 |

0 241 885

**Ansprüche**

1. Mit Wasser quellbare Zusammensetzung aus einem Geliermittel auf der Basis von hydrolysierten Homo-oder Copolymeren des Acrylnitril und aus einem inerten Metalloxid, dadurch gekennzeichnet, daß 1 bis 22% der Nitrilgruppen zu Amidgruppen und 99 bis 78% zu Alkalisalzen verseift sind.

2. Zusammensetzung nach Anspruch 1, dadurch gekennzeichnet, daß sie als Metalloxid feinteilige Kieselsäure in einer Menge von 1-50, vorzugsweise 2 bis 10 Gew.-%, bezogen auf das Gewicht der Zusammensetzung enthält.

3. Zusammensetzung nach Anspruch 1 oder 2, dadurch gekennzeichnet daß sie pulverförmig ist und eine schwammartige Struktur mit Porendurchmesser überwiegend im Bereich von 0,5 bis 10µm hat.

4. Verfahren zur Herstellung einer mit Wasser quellbaren Zusammensetzung aus einem Geliermittel auf der Basis von Homo-oder Copolymeren des Acrylnitrils und aus einem inerten Metalloxid, dadurch gekennzeichnet, daß man das Geliermittel in Gegenwart des Metalloxids herstellt.

5. Verfahren nach Anspruch 4, dadurch gekennzeichnet, daß das Metalloxid feinteiliges $SiO_2$ ist und es in einer Menge von 1 bis 50, vorzugsweise 2 bis 10 Gew.-%, bezogen auf das Gewicht der Zusammensetzung zugesetzt wird.

6. Verfahren nach Anspruch 4 oder 5, dadurch gekennzeichnet, daß man zur Herstellung des Geliermittels die Homo-oder Copolymeren des Acrylnitrils mit einem Alkalihydroxid nur bis zu einem Carbonamidgruppengehalt von 1 bis 22% verseift, wobei man insbesondere mit Natrium - oder Kaliumhydroxid in einer Menge von 0,5 bis 1,5 vorzugsweise von 1,0 bis 1,25 Mol pro Mol zu verseifender Komponente verseift.

7. Verfahren nach einem oder mehreren der Ansprüche 4 bis 6, dadurch gekennzeichnet, daß zur Herstellung des Geliermittels Acrylnitril allein oder zusammen mit ungesättigten Verbindungen, insbesondere mit Vinylacetat, Styrol oder Acrylsäure-bzw. Methacrylsäureestern zunächst zu einem nicht oder nur wenig in Wasser quellbaren Produkt polymerisiert wird, das dann teilweise verseift wird.

8. Verfahren nach einem oder mehreren der Ansprüche 4 bis 7, dadurch gekennzeichnet, daß der Acrylnitrilanteil 50 -99, vorzugsweise 85 bis 98 Gew.-% und der Anteil der Comonomeren 0 -30, vorzugsweise 5 bis 15 Gew.-%, bezogen auf die gesamten Ausgangsstoffe beträgt.

9. Verfahren nach einem oder mehreren der Ansprüche 4 bis 6, dadurch gekennzeichnet, daß zur Herstellung des Ge liermittels Acrylnitril zusammen mit ungesättigten Verbindungen insbesondere mit Acrylsäure, Maleinsäure, Vinylsulfonsäure, Acrylamid oder mit einem ungesättigten hydroxylgruppenhaltigen Polymeren, insbesondere mit Carboxymethylcellulose zu einem in Wasser sehr stark quellenden Produkt polymerisiert wird, das dann teilweise verseift wird.

10. Verfahren nach einem oder mehreren der Ansprüche 4 bis 7 oder 13, dadurch gekennzeichnet, daß der Anteil an Acrylnitril 10 bis 95, vorzugsweise 15 bis 80%, an ungesättigten sauren Comonomeren 5 bis 90, vorzugsweise 10 bis 85%, an ungesättigten neutralen Comonomeren 1 bis 50, vorzugsweise 2 bis 25%, und an gesättigten hydroxylgruppenhaltigen Comonomeren 1 bis 50, vorzugsweise 2 bis 25% beträgt.

11. Verfahren nach einem oder mehreren der Ansprüche 4 bis 10, dadurch gekennzeichnet, daß das Metalloxid erst bei der Verseifung zugesetzt wird, vorzugsweise jedoch bei der Homo-oder Copolymerisation von Acrylnitril anwesend ist.

12. Verfahren nach einem oder mehreren der Ansprüche 4 bis 11, dadurch gekennzeichnet, daß das Verseifungsmedium ein Gemisch aus Wasser und Alkohol mit 1 bis 4 C-Atomen, insbesondere Methanol und Ethanol ist und der Wassergehalt 5 - 40, vorzugsweise 10 - 30 Vol.-% beträgt.

13. Verwendung der nach einem oder mehreren der Ansprüche 4 bis 12 hergestellten Zusammensetzung bei der Windelherstellung oder bei der Flachdachbegrünung.

14. Eine nach einem oder mehreren der Ansprüche 4 bis 13 herstellbare Zusammensetzung.

Fig. 1

Abb. 2

FLS=TRSPEC

Abb. 3

FLS=TRSPEC

Abb. 4

Beispiel 22

Maßstab 100 : 1

Maßstab 1000 : 1

Abb. 5

Beispiel 48

Maßstab 100 : 1

Maßstab 1000 : 1